# EUROPÄISCHE PATENTSCHRIFT

(11) **EP 3 619 438 B1**
(45) Veröffentlichungstag und Bekanntmachung des Hinweises auf die Patenterteilung: **12.01.2022**
(21) Anmeldenummer: 17807693.1
(22) Anmeldetag: 08.11.2017
(51) Int. Cl.: F16B 13/08

(54) **ANORDNUNG ZUR BEFESTIGUNG EINES UNTERWASSERSCHEINWERFERS**
ARRANGEMENT FOR ATTACHING AN UNDERWATER LIGHTING UNIT
SYSTÈME POUR FIXER UN PROJECTEUR SOUS-MARIN

(30) Priorität: 05.05.2017 DE 202017102683 U
(43) Veröffentlichungstag der Anmeldung: 11.03.2020
(73) Patentinhaber: Mts Produkte für den Schwimmbadbau und die Unterwassertechnik GmbH, 40885 Ratingen (DE)
(72) Erfinder: SCHYDLO, Marc, 40885 Ratingen (DE)
(74) Vertreter: Patentanwälte Vomberg & Schart
(86) Internationale Anmeldenummer: PCT/DE2017/100949
(87) Internationale Veröffentlichungsnummer: WO 2018/202226

(56) Entgegenhaltungen:
- EP-A2- 0 952 262
- EP-A2- 1 503 026
- DE-A1- 19 747 980
- US-A- 4 248 271

## Beschreibung

Die Erfindung betrifft einen Unterwasserscheinwerfer mit einem Einbautopf und einer lösbaren Klemmverbindung.

Im Schwimmbecken oder Gartenteich werden in vorhandene Beckenwände oder Böden Nischen geschaffen, in denen ein Unterwasserscheinwerfer samt des Gehäuses, das häufig ein sogenannter Einbautopf ist, Platz finden kann. Der Einbautopf dient hierbei sowohl zur Aufnahme des Scheinwerfers als auch der hieran befestigten Zuleitungen, die aus der jeweiligen Beckenwand zu einer Spannungsversorgungsquelle geführt werden. Zumeist werden nach dem Stand der Technik Scheinwerfer mit Blenden versehen, die über eine Schraubverbindung mit dem Einbautopf und der Beckenwand verbunden werden, so dass die Blende mit dem Scheinwerfer etwa bündig mit der Beckenwand abschließt. Zwischen der Blende und dem Einbautopf sowie der Beckenwand werden in geeigneter Weise O-Ringe oder andere Dichtungsringe verwendet.

Als Leuchtmittel für die Scheinwerfer werden seit etwa Zweijahrzehnten Leuchtdioden verwendet, die entweder weißes oder auch monochromes Licht imitieren. Durch eine geeignete Steuerung kann an jedem Scheinwerfer bei Verwendung von mehreren unterschiedlichen Leuchtdioden ein farblich sich veränderndes Licht erzeugt werden. Die verwendeten LED besitzen gegenüber den zuvor verwendeten Glühbirnen den Vorteil eines deutlich geringeren Körpervolumens sowie einer hohen Lebensdauer. LEDs sind in der Regel auch stoß- und vibrationsfest und energiesparend. Beispielsweise in der DE 197 47 980 A1 wird ein Beleuchtungskörper mit Dioden vorgeschlagen, die auf einer vorgefertigten Platine angeordnet sind, die Teil eines flachen Gehäuses mit einer transparenten Kunststoffglasabdeckung als Lichtaustrittsfläche ist.

In den vergangenen Jahren konnte die Leistungsfähigkeit der Dioden erheblich gesteigert werden, so dass sich mit sogenannten Hochleistungsdioden hohe Lichtintensitäten erzielen lassen. Der Nachteil der Hochleistungsdioden besteht jedoch in ihrer höheren Wärmeentwicklung. Soweit die entstehende Wärme nicht durch Kühlflüssigkeiten abgeführt werden kann, kommt es zu einer eingeschränkten Lebensdauer der Leuchtdioden, die von Zeit zu Zeit gewechselt werden müssen. Im Regelfall ist hierbei ein Austausch einer Platine mit allen darauf befindlichen Leuchtdioden die wirtschaftlichste Lösung.

Neben den bereits genannten Schraubverbindungen, bei denen mehrere Befestigungsschrauben nacheinander gelöst werden müssen, sind aus dem Stand der Technik auch Klemmverbindungen bekannt, bei denen ein Befestigungsteil eine Öffnung aufweist, in die ein Aufweitkörper hineinsteckbar ist. Durch das Eintreiben dieses Aufweitkörpers weitet sich das Befestigungsteil aufgrund der Wandelastizität auf und kann eine Klemmung bewirken. Eine solche Klemmverbindung wird beispielsweise in der DE 10 2008 013 921 A1 für Autoscheinwerfer beschrieben. Allerdings ist eine solche Klemmverbindung entweder irreversibel oder schwer lösbar. Gegenüber den eingangs erwähnten Schraubverbindungen bestehen in der Handhabung sogar noch Nachteile.

Die US 4,248,271 A beschreibt eine scheibenförmige Abdeckung eines offenen Rohrendes mit einer integrierten Verriegelungseinrichtung, die im Rohr befestigt, aber außerhalb der Abdeckung mittels eines Werkzeugs betätigbar ist. Ein hohles kegelstumpfförmiges Gehäuse ragt von der Unterseite der Abdeckung in das Rohrinnere. Ein von der Abdeckung getragener Gewindebolzen, der über einen Schraubenkopf drehbar ist, erstreckt sich in die Rohrmitte. Entlang dieses Gewindebolzens ist eine Laufbuchse mit schwenkbar angelenkten und sich radial erstreckenden Verriegelungsarmen bewegbar. Die Verriegelungsarme besitzen eine Länge, so dass sich bei vollständig entriegelter Abdeckung deren freien Enden gerade durch die Wände des Gehäuses erstrecken. Zum Abdichten des Rohres wird der Gewindebolzen gedreht bis die freien Ende der Verriegelungsarme an der Rohrinnenwand anliegen.

Die EP 0 952 262 A2 beschreibt eine Klemmvorrichtung zum Verriegeln von Boden- oder Wandzugslöchern oder -rosten, mit einem Gewindezapfen, einer hohlen Stützeinrichtung mit einem komplementären Innengewinde, zwei Backen, die symmetrisch angelenkt sind sowie einem hohlen Expander, der auf dem Gewindeschafft unter den Backen angeordnet ist und in dessen Durchgangsloch der Gewindeschafft gleitend bewegbar ist. Durch Drehung des Gewindezapfens können die Backen radial nach außen verschwenkt und zur Fixierung an der Innenwand verwendet werden.

Es ist Aufgabe der vorliegenden Erfindung einen Unterwasserscheinwerfer zu schaffen, dessen Klemmverbindung leicht und wiederholt zuverlässig lösbar ist.

Diese Aufgabe wird durch einen Unterwasserscheinwerfer nach Anspruch 1 gelöst, der erfindungsgemäß dadurch gekennzeichnet ist, dass die Klemmverbindung aus einem über eine Gewindespindel betätigbaren Spreizkörper besteht.

Besonderer Vorteil dieser Anordnung besteht darin, dass nur ein einziges Betätigungselement, nämlich die Gewindespindel bewegt werden muss, um eine zuverlässige Klemmung zu bewirken.

Vorteilhafte Weiterbildungen dieses Unterwasserscheinwerfers sind in den Unteransprüchen beschrieben.

So werden vorzugsweise zwei Schwenkarme über eine Schwenkachse schwenkbar miteinander verbunden, wobei die Schwenkachse mit einem ein Innengewinde aufweisenden Körper zur Gewindespindelaufnahme ausgestattet ist. Durch Drehen der Gewindespindel werden je nach Drehrichtung die beiden Schwenkarme zu einer Aufweitung auseinander gespreizt oder zusammengeführt. Durch die Spreizung der Schwenkarme wird der Scheinwerfer an der Einbautopfinnenwandung fixiert.

Um eine höhere Stabilität beim Spreizen und Zusammenführen der Schwenkarme zu garantieren, werden die freien schwenkbaren Enden des Spreizkörpers in einer Traverse längsführbar angeordnet. Vorzugsweise besitzen die Spreizkörper im Querschnitt ein U-Profil, was auch deren Stabilität vergrößert.

Bei einer achsensymmetrischen Schwenkbarkeit von zwei Schwenkarmen (oder auch mehreren Schwenkarmen) bietet es sich zudem an, dass die Gewindespindel den Scheinwerfer zentral durchdringt und am äußeren, dem Schwimmbecken zugewandten Ende ein Profil zur Drehbetätigung aufweist. Als Profil kann insbesondere ein Schlitz-, ein Kreuzschlitz- oder ein Sternprofil zum Eingriff eines Schraubendrehers benutzt werden.

Zur längsaxialen Fixierung der Anordnung besitzt die Gewindespindel am hinteren Ende eine aufgeschraubte Mutter, die im Einbaugehäuse gehalten wird.

Idealerweise ist die Traverse an der Rückseite der Leuchtmittelhalterung, zumeist einer Platine auf deren Vorderseite mehrere LEDs angeordnet sind, befestigt.

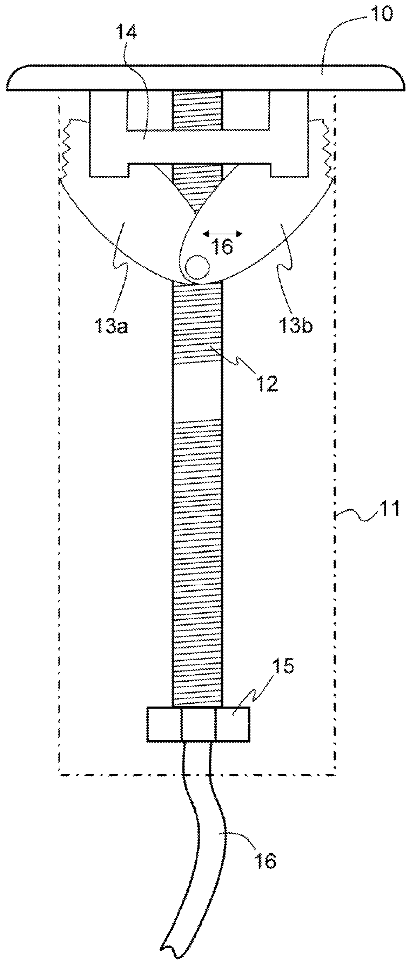

Ein Ausführungsbeispiel ist in der Zeichnung dargestellt. Die Prinzipskizze zeigt einen Unterwasserscheinwerfer 10, der in einem topfförmigen strichliniert dargestellten Einbaugehäuse festklemmbar ist, Hierzu dient eine Klemmverbindung, die aus einem über eine Gewindespindel 12 betätigbaren Spreizkörper 13a, 13b besteht. Der dargestellte Spreizkörper besitzt zwei Schwenkarme 13a und 13b, die bei der Betätigung der Gewindespindel 12 auf die Innenwand des Einbautopfes 11 zuschwenkbar oder abschwenkbar sind. Die Spreizkörper sind an ihrem freien schwenkbaren Ende in einer Traverse 14 längsführbar angeordnet. Die Gewindespindel 12 wird am hinteren Ende in einer Mutter 15 geführt. Die elektrische Leitung 16 kann, wie in der Abbildung dargestellt, innerhalb der Gewindespindel angeordnet sein, die als Hohlprofil ausgeführt ist. Durch Betätigung der Klemmvorrichtung können je nach Steigung des Gewindes der Gewindespindel 12 die Schwenkarme 13a, 13b in Richtung des Doppelpfeils 16 bewegt werden. Die Befestigung des Scheinwerfers über die erfindungsgemäße Klemmverbindung ist einfach aufgebaut und leicht handhabbar.

## Patentansprüche

1. Unterwasserscheinwerfer mit einem Einbautopf (11) und einer lösbaren Klemmverbindung,
**dadurch gekennzeichnet, dass**
die Klemmverbindung aus einem über eine Gewindespindel (12) betätigbaren Spreizkörper (13a, 13b) besteht.

2. Unterwasserscheinwerfer nach Anspruch 1, **dadurch gekennzeichnet**, das zwei Schwenkarme (13a, 13b) über eine Schwenkachse schwenkbar miteinander verbunden sind, wobei die Schwenkachse mit einem ein Innengewinde aufweisenden Körper zur Gewindespindelaufnahme ausgestattet ist.

3. Unterwasserscheinwerfer nach Anspruch 1 oder 2, **dadurch gekennzeichnet, dass** die Spreizkörper (13a, 13b) an ihrem freien schwenkbaren Ende in einer Traverse (14) längsführbar angeordnet sind.

4. Unterwasserscheinwerfer nach einem der Ansprüche 1 bis 3, **dadurch gekennzeichnet, dass** die Spreizkörper (13a, 13b) im Querschnitt ein U-Profil aufweisen.

5. Unterwasserscheinwerfer nach einem der Ansprüche 1 bis 4, **dadurch gekennzeichnet, dass** die Gewindespindel (12) den Scheinwerfer (10) zentral durchdringt und am äußeren, dem Schwimmbecken zugewandten Ende ein Profil zur Drehbetätigung aufweist, insbesondere einen Schlitz, einen Kreuzschlitz oder ein Sternprofil zum Eingriff eines Schraubendrehers.

6. Unterwasserscheinwerfer nach einem der Ansprüche 1 bis 5, **dadurch gekennzeichnet, dass** die Gewindespindel (12) am hinteren Ende in einer Mutter (15) geführt wird.

7. Unterwasserscheinwerfer nach einem der Ansprüche 3 bis 6, **dadurch gekennzeichnet, dass** die Traverse (14) an der Rückseite der Leuchtmittelhalterung befestigt ist, die vorzugsweise mit mindestens einer LED bestückt ist.

## Claims

1. Underwater spotlight with a mounting pot (11) and a releasable clamp connection,
**characterized in that**
the clamp connection consists of a spreader body (13a, 13b) actuated by a threaded spindle (12).

2. Underwater spotlight according to claim 1, **characterized in that** two swivel arms (13a, 13b) are pivotable connected one to the other via a swivel axis, the swivel axis being equipped with a body having an internal thread for receiving the threaded spindle.

3. Underwater spotlight according to claim 1 or 2, **characterized in that** the spreaders (13a, 13b) are arranged longitudinally guidable in a traverse (14) at their free pivotable end.

4. Underwater spotlight according to one of the claims 1 to 3, **characterized in that** the spreaders (13a, 13b) have an U-profile in cross section.

5. Underwater spotlight according to one of the claims 1 to 4, **characterized in that** the threaded spindle (12) penetrates the spotlight centrally and has a profile for rotary actuation on the outer end facing the swimming pool, in particular a slot, a cross slot or a star profile for engaging a screwdriver.

6. Underwater spotlight according to one of claims 1 to 5, **characterized in that** the threaded spindle (12) is guided in a nut at the rear end.

7. Underwater spotlight according to one of the claims 3 to 6, **characterized in that** the traverse (14) is fastened to the rear end of the lamp holder, which is preferably equipped with at least one LED.

## Revendications

1. Projecteur sous-marin avec un pot de montage (11) et un raccord de serrage amovible, **caractérisé par le fait que** le raccord de serrage est constitué d'un corps d'expansion (13a, 13b) qui peut être actionné par l'intermédiaire d'une tige filetée (12).

2. Projecteur sous-marin selon la revendication 1, **caractérisé par le fait que** deux bras pivotants (13a, 13b) sont reliés l'un à l'autre à pivotement par l'intermédiaire d'un axe de pivotement, dans lequel l'axe de pivotement est équipé d'un corps comprenant un taraudage et destiné à recevoir la tige filetée.

3. Projecteur sous-marin selon la revendication 1 ou 2, **caractérisé par le fait que** les corps d'expansion (13a, 13b) sont disposés à leur extrémité libre pivotante dans une traverse (14) de manière à pouvoir être guidés longitudinalement.

4. Projecteur sous-marin selon l'une quelconque des revendications 1 à 3, **caractérisé par le fait que** les corps d'expansion (13a, 13b) présentent un profil en U en coupe transversale.

5. Projecteur sous-marin selon l'une quelconque des revendications 1 à 4, **caractérisé par le fait que** la tige filetée (12) traverse de manière centrale le projecteur (10) et présente à l'extrémité extérieure tournée vers la piscine un profil d'actionnement rotatif, en particulier une fente, une fente en croix ou un profil en étoile pour l'engagement d'un tournevis.

6. Projecteur sous-marin selon l'une quelconque des revendications 1 à 5, **caractérisé par le fait que** la tige filetée (12) est guidée à l'extrémité arrière dans un écrou (15).

7. Projecteur sous-marin selon l'une quelconque des revendications 3 à 6, **caractérisé par le fait que** la traverse (14) est fixée sur la face arrière du support de lampe qui, de préférence, est équipé d'au moins une DEL.
